# EUROPÄISCHE PATENTANMELDUNG

(11) **EP 0 757 947 A1**
(43) Veröffentlichungstag der Anmeldung: **12.02.1997**
(21) Anmeldenummer: 96112351.0
(22) Anmeldetag: 31.07.1996
(51) Int. Cl.: B60R 22/46

(54) **Pyrotechnischer Gurtstraffer**

(30) Priorität: 09.08.1995 DE 19529198
(71) Anmelder: ADAM OPEL AG, 65423 Rüsselsheim (DE)
(72) Erfinder: Derichs, Wilfried, Dipl.-Ing., 55232 Alzey (DE)
(74) Vertreter: Kümpfel, Heinz, Dipl.-Ing.

(57) **Zusammenfassung**

Bei einem pyrotechnischen Gurtstraffer zum Straffen der Gurtlose an Sicherheitsgurten von Kraftfahrzeugen im Crashfall mit einem am Fahrzeugkörper oder einem Sitz befestigten Gehäuse (1), einem am Gehäuse (1) angesetzten Zylinder (2), einem im Zylinder (2) unter dem Druck eines Gases verschiebbaren mit einer Rücklaufsperre (4) versehenen Kolben (3), einem am Kolben (3) angelenkten und mit einem Gurtschloßteil (10) verbundenen Seil (8), einem im Gehäuse (1) befindlichen Umlenkelement für das Seil (8) und einem pyrotechnischen Gasgenerator (5) zur Erzeugung von Druckgas ist der Gasgenerator (5) im Arbeitsraum des Zylinders (2) zwischen Kolben (3) und Gehäuse (1) angeordnet.

Damit braucht das Gehäuse (1) keinen Raum für die Aufnahme des Gasgenerators (5) aufweisen. Ebenso muß kein Gasführungskanal im Gehäuse (1) vorgesehen werden. Das Gehäuse (1) kann kostengünstiger und kleiner als bei bekannten pyrotechnischen Gurtstraffern hergestellt werden.

## Beschreibung

Die Erfindung betrifft einen pyrotechnischen Gurtstraffer zum Straffen der Gurtlose an Sicherheitsgurten von Kraftfahrzeugen im Crashfall mit einem am Fahrzeugkörper oder einem Sitz befestigten Gehäuse, einem am Gehäuse angesetzten Zylinder, einem im Zylinder unter dem Druck eines Gases verschiebbaren mit einer Rücklaufsperre versehenen Kolben, einem am Kolben angelenkten und mit mindestens einem Gurtende verbundenen Seil, einem im Gehäuse befindlichen Umlenkelement für das Seil und einem pyrotechnischen Gasgenerator zum Erzeugen von Druckgas.

Ein derartiger Gurtstraffer ist in DE 39 29 114 A1 dargestellt und beschrieben. Bei den bekannten Gurtstraffern dieser Art befindet sich in dem Gehäuse ein Raum für die Aufnahme des pyrotechnischen Gasgenerators. Dieser Raum ist mittels einer im Gehäuse verlaufenden Bohrung oder einer besonderen Leitung mit dem Arbeitsraum des am Gehäuse befestigten Zylinders verbunden. Bei Aktivierung des Gurtstraffers im Falle eines Crashs strömt das vom Gasgenerator generierte Gas unter Druck durch die Bohrung bzw. die besondere Leitung in den Zylinder und treibt den Kolben in eine Endstellung. Dabei wird das am Kolben angelenkte Seil mitgenommen, welches das mit ihm verbundene Gurtende zurückzieht, so daß der Sicherheitsgurt insgesamt gestrafft wird. Die Rücklaufsperre am Kolben verhindert ein vorzeitiges Lösen der straffen Gurtspannung.

Das Gehäuse für einen solchen Gurtstraffer ist aufwendig in der Fertigung und auch relativ groß. Es ist somit nur kostenaufwendig herstellbar und bedarf erheblichen Einbauraum.

Der Erfindung liegt die Aufgabe zugrunde, einen pyrotechnischen Gurtstraffer der eingangs beschriebenen Art dahingehend zu verbessern, daß er ein einfacheres Gehäuse mit geringerem Volumen hat und damit kostengünstiger herstellbar und besser einbaubar ist.

Erfindungsgemäß wird diese Aufgabe dadurch gelöst, daß der Gasgenerator im Arbeitsraum des Zylinders angeordnet ist, wobei das Seil an einer Querschnittsaussparung des Gasgenerator vom Kolben zu dem Umlenkelement geführt ist.

Damit ist ein gesonderter Raum für die Aufnahme des Gasgenerators im Gehäuse nicht mehr erforderlich. Ebenso kann die Bohrung bzw. die gesonderte Leitung im Gehäuse entfallen. Das Gehäuse reduziert sich somit auf die Verbindung mit dem Zylinder und das Umlenkelement des Seils und kann so wesentlich einfacher und kleiner als herkömmliche Gehäuse hergestellt werden.

Die Querschnittsaussparung des Gasgenerators kann als längsverlaufende Nut, Abflachung oder Bohrung ausgebildet sein. An diesen Querschnittsaussparungen kann das Seil am Gasgenerator vorbeigeführt werden.

Da das Gehäuse nicht breiter als der Zylinderdurchmesser sein muß, kann in vorteilhafter Weise der Zylinder direkt mit dem oberen Teil einer Sitzschiene verbunden werden bzw. die Sitzschiene so gehaltert werden, daß sie den Zylinder selbst bildet, wobei sich an den Zylinder das Gehäuse unmittelbar anschließt. Dadurch kann eine weitere Vereinfachung der Konstruktion und damit eine Kostenreduzierung erreicht werden.

Anhand von Zeichnungen sind nachstehend zwei Ausführungsbeispiele der Erfindung beschrieben. Es zeigen
- Fig. 1:: einen erfindungsgemäßen Gurtstraffer, teilweise geschnitten, in perspektivischer Darstellung;
- Fig. 2:: eine weitere Ausführungsform eines erfindungsgemäßen Gurtstraffers in perspektivischer Darstellung.

An einem Gehäuse 1 ist ein rohrförmiger Zylinder 2 befestigt. In dem Zylinder 2 befindet sich ein Kolben 3 mit einer an sich bekannten Rücklaufsperre 4. Im Zylinder 2 zwischen dem Kolben 3 und dem Gehäuse 1 befindet sich ein pyrotechnischer Gasgenerator 5. Der Gasgenerator 5 ist mit einem nicht dargestellten Zünder versehen, der über ein mit einem Stecker 6 verbundenes Kabel 7 von einem Steuerteil her elektrisch ausgelöst werden kann. An dem Kolben 3 ist ein Seil 8 befestigt, welches an einer Abflachung 9 des Gasgenerators 5 am Gasgenerator 5 vorbei in das Gehäuse 1 und in diesem um ein Umlenkelement an ein Gurtschloßteil 10 geführt ist. Das Umlenkelement kann als Rolle oder Gleitbahn innerhalb des Gehäuses 1 ausgeführt sein.

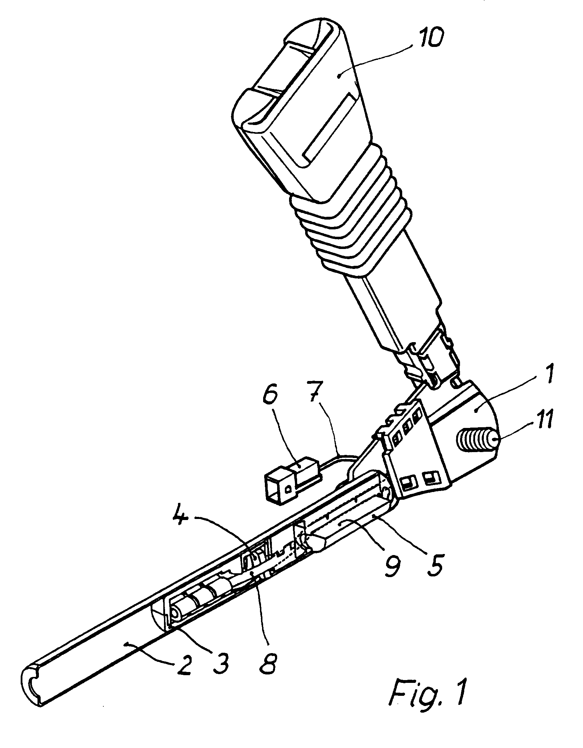

Figur 1 zeigt ein Ausführungsbeispiel mit einer Befestigungsschraube 11, die innerhalb des Gehäuses 1 auch als Achse für das Umlenkelement dienen kann. Sie ermöglicht die Befestigung des Gehäuses 1 an die tragende Struktur des Kraftfahrzeuges. Durch die erfindungsgemäße Anordnung des Gasgenerators 5 innerhalb des Zylinders 2 kann als besonderer Vorteil ein kleines, mit geringen Kosten herstellbares Gehäuse 1 realisiert werden. Ein besonderer Raum für einen Gasgenerator ist im Gehäuse nicht mehr erforderlich. Auch bedarf es keines besonderen Kanals für die Zuführung des unter Druck stehenden Gases zu dem Arbeitsraum des Zylinders 2. Trotzdem ist der Gasgenerator 5 gegen mechanische Einflüsse geschützt, da die Wandung des Zylinders 2 äußere Einwirkungen sicher verhindert.

Im dargestellten Beispiel weist der Gasgenerator 5 eine Abflachung 9 auf, welche innerhalb des Zylinders 2 Raum für das Vorbeiführen des Seils 8 am Gasgenerator 5 läßt. Gemäß der Erfindung sind weitere Ausführungsbeispiele möglich, indem der Gasgenerator 5 im Querschnitt U-förmig um das Seil 8 herumgelegt ist oder mit einer mittigen Bohrung versehen ist, durch die das Seil 8 geführt ist.

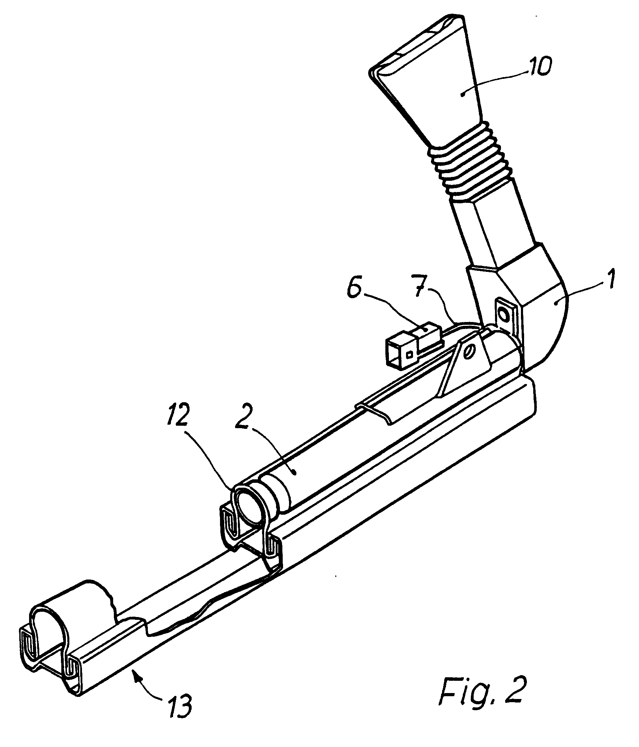

Mit Figur 2 ist ein Ausführungsbeispiel dargestellt, bei welchem der rohrförmige Zylinder mit einem verschiebbaren Teil 12 einer Sitzschiene 13 verbunden ist. Dieser Teil 12 kann zusammen mit einem auf der Sitzschiene 13 gelagerten Sitz verschoben werden. Dies ist möglich, weil das Gehäuse 1 des Gurtstraffers infolge der Erfindung so schmal gebaut werden kann, daß das Gehäuse 1 zusammen mit dem Teil 12 der Sitzschiene 13 in den beengten Raumverhältnissen an der Seite eines Fahrzeugsitzes bewegt werden kann. Der Gurtanlenkpunkt mit dem Gurtschloß 10 kann so auch bei Anwendung eines pyrotechnischen Gurtstraffers mit dem Fahrzeugsitz in vorteilhafter Weise mitverschiebbar ausgeführt werden.

## Patentansprüche

1. Pyrotechnischer Gurtstraffer zum Straffen der Gurtlose an Sicherheitsgurten von Kraftfahrzeugen im Crashfall mit einem am Fahrzeugkörper oder einem Sitz befestigten Gehäuse, einem am Gehäuse angesetzten Zylinder, einem im Zylinder unter dem Druck eines Gases verschiebbaren mit einer Rücklaufsperre verbundenen Kolben, einem am Kolben angelenkten und mit mindestens einem Gurtende verbundenen Seil, einem im Gehäuse befindlichen Umlenkelement für das Seil und einem pyrotechnischen Gasgenerator zur Erzeugung von Druckgas, **dadurch gekennzeichnet**, daß der Gasgenerator (5) im Arbeitsraum des Zylinders (2) angeordnet ist, wobei das Seil (8) in einer Querschnittsaussparung des Gasgenerators (5) vom Kolben (3) zu dem Umlenkelement geführt ist.

2. Pyrotechnischer Gurtstraffer nach Anspruch 1, **dadurch gekennzeichnet**, daß die Querschnittsaussparung des Gasgenerators (5) als längsverlaufende Nut, als Abflachung (9) oder Bohrung ausgebildet ist.

3. Pyrotechnischer Gurtstraffer nach Anspruch 1 und 2, **dadurch gekennzeichnet**, daß der Zylinder (2) direkt mit dem oberen Teil (12) einer Sitzschiene (13) verbunden ist.
